# EUROPEAN PATENT SPECIFICATION

(11) **EP 2 959 810 B1**
(45) Date of publication and mention of the grant of the patent: **08.05.2019**
(21) Application number: 14754025.6
(22) Date of filing: 25.02.2014
(51) Int. Cl.: A47J 37/06

(54) **INDUCTION HEAT COOKING INSTRUMENT**
INDUKTIV BEHEIZTE KOCHVORRICHTUNG
INSTRUMENT DE CUISSON À CHAUFFAGE PAR INDUCTION

(30) Priority: 25.02.2013 JP 2013034185; 30.05.2013 JP 2013113708
(43) Date of publication of application: 30.12.2015
(73) Proprietor: Panasonic Intellectual Property Management Co., Ltd., Osaka-shi, Osaka 540-6207 (JP)
(72) Inventor: TOMITA, Hideo, Osaka-shi, Osaka 540-6207 (JP); KITAIZUMI, Takeshi, Osaka-shi, Osaka 540-6207 (JP); NISHIMURA, Makoto, Osaka-shi, Osaka 540-6207 (JP); KUROSE, Yoichi, Osaka-shi, Osaka 540-6207 (JP); FUJINAMI, Tomoya, Osaka-shi, Osaka 540-6207 (JP)
(74) Representative: Eisenführ Speiser
(86) International application number: PCT/JP2014/000980
(87) International publication number: WO 2014/129208

(56) References cited:
- JP-A- H07 263 132
- JP-A- H07 263 132
- JP-A- S57 200 117
- JP-A- 2000 139 697
- JP-A- 2010 262 751
- JP-A- 2011 501 095
- JP-A- 2012 065 733
- JP-A- 2012 113 975
- JP-A- 2012 113 975
- JP-Y2- S5 745 953
- JP-Y2- S5 760 752
- KR-A- 20120 030 119

## Description

### Technical Field

This disclosure relates to an induction heating cooker that inductively heats an object to be heated such as a metal cooking pan placed on a top plate of an induction heating device, and in particular, to an induction heating cooker that uses inductively-fed power to enable cooking by radiation heating.

### Background Art

Conventionally, this type of induction heating cooker includes a cooking container to be accommodated in a cooking instrument body, the cooking container being covered with a lid at its upper end, a placing section that places the cooking container thereon; a heating means that inductively heats the cooking container; and a power supply. In the lid, a power receiving coil electromagnetically induced by an induction heating coil forming the heating means and a heating section energized by the power receiving coil are provided (refer to Patent Literatures 1 and 2, for example).

Describing the operation of the cooking instrument in the above configuration, the cooking container is placed on the placing section of the cooking instrument body provided with the induction heating coil, the lid is placed thereon, and the power is turned on. The energized induction heating coil inductively heats the cooking container. Simultaneously, the power receiving coil is electromagnetically induced by another induction heating coil, and energizes the heating section provided in the lid. Then, the cooking container and the heating section can cook a food material with heat from upper and lower sides.

Patent Literature 3 discloses a container which contains a material to be cooked which is laid on an insulation plate and which is covered with an auxiliary heating member. Cooking function, heating time, and heating force are set by an operation part and a coil for heating is energized by high frequency current generated from a high frequency drive circuit part. Induction current thus flows in the bottom of the container so as to heat the material to be cooked. At the same time, a coil for power transmission is energized so that a receiving coil is inductively connected to high frequency current of the coil and induces high frequency voltage for driving. This high frequency voltage is supplied to a heater part via a thermostat so as to heat the heater part till reaching prescribed temperature of the thermostat. Voltage induced in the coil is thus received by connecting a heating element to the coil.

Patent Literature 4 comprises a composite induction heating cooker which is composed of: an induction heating cooker consisting of a body unit having induction heating devices, a cooling device and control devices in an outer-shell case, and a top plate unit, and a grill cooking utensil loaded on a top plate so as to be opposed to the induction heating device, which latter is structured of a rotating body opening and closing an upper frame body and a lower frame body making up a case, a substitution coil having a copper wire wound around in nearly concentrically as a donut shape, and a resistive heating device. The substitution coil is arranged under the lower frame body so as to be opposed to the induction heating device, and an end part of the substitution coil is electrically connected to the resistive heating device.

Patent Literature 5 discloses a cooking vessel having a moveable cooking plate wherein a cooking plate can be moved to in left and right sides of a heat source body in order to prevent meat from being burned. The cooking vessel comprises a moving guide, a moving unit, and a fitting part. The moving guide is formed in the upper part of a base body. The moving unit is coupled to the moving guide to move along the moving guide. The moving unit has a hollow hole inside. The fitting part is formed underside of the cooking plate and inserted into the hollow hole of the moving unit. Oil generating from meat is guided to a oil receiver through the hollow hole.

### Citation List

### Patent Literature

PLT 1: Japanese Patent No. 2909979
PLT 2: Japanese Unexamined Patent Publication No. 2012-113975
PLT 3: Japanese Patent Application No. H07-263132
PLT 4: Japanese Patent Application No. 2010-262751
PLT 5: Korean Patent Application No. 2012 0030119

### Summary of Invention

### Technical Problem

However, according to the configuration for the conventional induction heating cooker, the lid covers the cooking container, obstructing the user from viewing the food material being cooked. Moreover, the cooking container cannot be taken out of the cooking instrument body unless the lid is detached. As such, the conventional induction heating cooker can heat the object to be heated from upper and lower sides by use of the lid having the heating section, but has a problem to be user unfriendly.

An object of this disclosure is to provide a user friendly induction heating cooker capable of solving the above-mentioned conventional problems.

### Solution to Problem

In order to solve the problems, an induction heating cooker of this disclosure includes:
a radiation heater having a heating element configured to execute radiation heating from above to an object to be heated placed on a cooking container;
a roof supporting the radiation heater;
a power receiving part having a power receiving coil configured to receive inductively-fed power;
a connecting part configured to electrically connect the power receiving coil of the power receiving part to the heating element of the radiation heater; and
a supporting member extending from the power receiving part to support the roof, wherein
the supporting member supports the roof so as not to vertically overlap at least the heating element with the power receiving part, and so as to have an opening through which the cooking container can access a heating area of the radiation heater.

### Effects of Invention

An induction heating cooker of this disclosure facilitates placement and take-out of a cooking container, and enables viewing of a food material during cooking, improving the user-friendliness.

### Brief Description of Drawings

Fig. 1 is a perspective view illustrating the configuration of principal parts of an induction heating cooker in an embodiment 1 of this disclosure.
Fig. 2 is a sectional view illustrating the configuration of principal parts of the induction heating cooker and an induction heating device in the embodiment 1 of this disclosure.
Fig. 3 is a perspective view illustrating the induction heating cooker and the induction heating device in the embodiment 1 of this disclosure.
Fig. 4 is a perspective view illustrating the induction heating device, with a top plate used for the induction heating cooker in the embodiment 1 of this disclosure removed.
Fig. 5 is a block diagram illustrating control elements of the induction heating cooker in the embodiment 1 of this disclosure.
Fig. 6 is a perspective view illustrating the configuration of principal parts of an induction heating cooker in an embodiment 2 of this disclosure.
Fig. 7 is a perspective view illustrating the configuration of principal parts of the induction heating cooker in the embodiment 2 of this disclosure when viewed from below.
Fig. 8 is a side sectional view illustrating the configuration of principal parts of an induction heating cooker and an induction heating device in an embodiment 3 of this disclosure.
Fig. 9 is a perspective view illustrating the configuration of principal parts of the induction heating cooker in the embodiment 3 of this disclosure.
Fig. 10 is a front sectional view illustrating the configuration of principal parts of the induction heating cooker in the embodiment 3 of this disclosure.
Fig. 11 is a perspective view illustrating the induction heating cooker and the induction heating device in the embodiment 3 of this disclosure.
Fig. 12 is an enlarged side sectional view illustrating the configuration of principal parts of the induction heating cooker in the embodiment 3 of this disclosure.
Fig. 13 is an enlarged perspective view illustrating a roof of the induction heating cooker in the embodiment 3 of this disclosure.
Fig. 14 is an enlarged perspective view illustrating another roof of the induction heating cooker in the embodiment 3 of this disclosure.
Fig. 15 is an enlarged perspective view illustrating another roof of the induction heating cooker in the embodiment 3 of this disclosure.
Fig. 16 is an enlarged perspective view illustrating another roof of the induction heating cooker in the embodiment 3 of this disclosure.
Fig. 17 is an enlarged perspective view illustrating another roof of the induction heating cooker in the embodiment 3 of this disclosure.
Fig. 18 is a perspective view illustrating a modification example of the induction heating cooker in the embodiment 3 of this disclosure.
Fig. 19 is a perspective view illustrating another modification example of the induction heating cooker in the embodiment 3 of this disclosure.

### Description of Embodiments

An induction heating cooker according to a first aspect of this disclosure includes:
a radiation heater having a heating element configured to execute radiation heating from above to an object to be heated placed on a cooking container;
a roof supporting the radiation heater;
a power receiving part having a power receiving coil configured to receive inductively-fed power;
a connecting part configured to electrically connect the power receiving coil of the power receiving part to the heating element of the radiation heater; and
a supporting member extending from the power receiving part to support the roof, wherein
the supporting member supports the roof so as not to vertically overlap at least the heating element with the power receiving part, and so as to have an opening through which the cooking container can access a heating area of the radiation heater.

With such configuration, the user can freely place the cooking container in the heating area below the radiation heater through the opening, or take the cooking container out of the heating area through the opening. Further, even during cooking, the user can view the food material through the opening, and readily check the cooking state. In this manner, the induction heating cooker of this disclosure can improve the user-friendliness.

Hot air generated in the cooking container can diffuse through the opening to the outside of the roof. Further, since heat of the radiation heater is conducted to the power receiving part through the supporting member, the amount of heat conducted to the power receiving part is small. This can suppress an increase in the temperature of the power receiving coil.

An induction heating cooker according to a second aspect of this disclosure further includes a leg extending from an end of the power receiving part along an edge of the heating area.

With such configuration, the leg can bear the weight of the radiation heater. That is, the induction heating cooker of this disclosure can support the weight of the radiation heater by use of the supporting member and the leg. This can bring the radiation heater and the power receiving part into balance in weight, achieving a stable induction heating cooker.

In an induction heating cooker according to a third aspect of this disclosure, the leg according to the second aspect horizontally opens the heating area surrounded with the leg.

With such configuration, the user can place the cooking container in the heating area below the radiation heater or take the cooking container out of the heating area through the opened space of the leg. This can improve the convenience of the induction heating cooker of this disclosure.

In an induction heating cooker according to a fourth aspect of this disclosure, the leg and the roof according to the second or third aspect have a space therebetween.

With such configuration, the space between the leg and the roof forms an opening. Especially when the cooking container includes a user-graspable collar at its periphery, the collar of the cooking container can be located in the opening. Thus, the induction heating cooker can be shortened by the length of the collar of the cooking container, reducing the footprint of the induction heating cooker to miniaturize the induction heating cooker as a whole. Further, since the opening between the leg and the roof is located outside of the heating area heated with the radiation heater, the collar of the cooking container is cooled with heat radiation to outside air. Therefore, the induction heating cooker of this disclosure can suppress an uncomfortable "hot" feeling of the user at take-out of the cooking container, and improve the user-friendliness.

In an induction heating cooker according to a fifth aspect of this disclosure, a terminal of the heating element of the radiation heater according to any one of the first to fourth aspects is joined to an end of the roof, and
the supporting member is joined to the end of the roof.

With such configuration, the supporting member can be connected to the low-temperature end of the roof to which the terminal of the heating element is joined. Since the terminal of the heating element is less subjected to heating with the heating element than the center of the heating element, the temperature of the end of the roof, to which the terminal of the heating element is joined, is lower than that of the center of the heating element. That is, since the supporting member is joined to the end of the roof, which is cooler than the center of the heating element, the amount of heat conducted to the power receiving part via the supporting member is reduced, suppressing an increase in the temperature of the power receiving coil.

In induction heating cooker according to a sixth aspect of this disclosure, the supporting member according to any one of claims first to fifth aspects has a blocking member disposed between the radiation heater and the power receiving part, wherein
the blocking member covers an end of the power receiving part on the side of the cooking container, extends upward from the end, and has a gap between the radiation heater and the blocking member.

With such configuration, the blocking member blocks radiation from the radiation heater and the cooking container to the power receiving part. Further, in the case where an air flow from a ventilation fan or air conditioner is present, the blocking member can prevent hot air generated in the cooking container from flowing into the power receiving part due to the above-mentioned surrounding air flow. Therefore, the induction heating cooker of this disclosure can suppress an increase in the temperature of the power receiving coil.

In an induction heating cooker according to a seventh aspect of this disclosure, the roof according to any one of the first to sixth aspects has an air passage disposed between an inner shell and an outer shell, and an exhaust passage vertically communicates an inner space inside formed by the inner shell and an outer space outside of the outer shell,
the radiation heater has a reflector which directs radiant heat from the heating element toward the object to be heated, and is disposed in the inner space of the roof,
an inlet of the air passage is disposed near an end of the inner shell or the outer shell of the roof, and
an outlet of the air passage is disposed near the exhaust passage.

With such configuration, hot air generated in the hot heated cooking container passes through the exhaust passage, and is discharged through the outlet of the exhaust passage. At this time, the outlet of the air passage, which is disposed near the outlet of the exhaust passage, is subjected to a negative pressure, and outside air is sucked into the air passage through the inlet of the air passage. The induction heating cooker of this disclosure can suppress an increase in the temperature of the outer shell of the roof by cooling the outer shell of the roof with outside air passing through the air passage.

In an induction heating cooker according to an eighth aspect of this disclosure, the outlet of the air passage according to the seventh aspect communicates with the exhaust passage.

With such configuration, since the outlet of the air passage communicates with the exhaust passage, the outlet of the exhaust passage is subjected to a negative pressure and thus, more outside air is sucked into the air passage through the inlet of the air passage.

In an induction heating cooker according to a ninth aspect of this disclosure, the roof according to the seventh or eighth aspect has a partition disposed in the air passage, and
the partition divides the air passage into a first air passage formed between the outer shell and the partition, and a second air passage formed between the partition and the inner shell.

With such configuration, hot air is pushed by indoor air flow and overflows the inner space inside of the inner shell of the roof and then, flows into the second air passage. Meanwhile, outside air flows in the first air passage and cools the outer shell of the roof from the inside. Further, the partition blocks radiation from the inner shell, suppressing the conduction of radiant heat from the heating element to the outer shell of the roof via the reflector and the inner shell.

In an induction heating cooker according to a tenth aspect of this disclosure, the roof according to the ninth aspect joins the outer shell to the partition, joins the partition to the inner shell, and joins the inner shell to the reflector of the radiation heater.

With such configuration, since the outer shell of the roof is not directly joined to the reflector, an increase in the temperature of the outer shell of the roof can be suppressed. As described above, the outer shell of the roof conducts heat from the reflector via the partition, suppressing an increase in the temperature. That is, the heat conduction distance between the outer shell of the roof and the reflector can be increased, suppressing an increase in the temperature of the outer shell of the roof.

In an induction heating cooker according to an eleventh aspect of this disclosure, the outlet of the air passage in the roof according to any one of the seventh to tenth aspects disposes the outlet of the air passage at a position higher than a position of the inlet of the air passage to incline a path from the inlet to the outlet of the air passage.

With such configuration, hot air flows along the inclined inner shell of the roof and tends to concentrate at the exhaust passage. Further, inclination of the air passage of the roof promotes hot air or outside air flowing in the passage to rise due to natural convection. Accordingly, the amount of hot air discharged from the exhaust passage increases, and a negative pressure becomes large at the outlet of the air passage. For this reason, the induction heating cooker of this disclosure can suck more outside air into the air passage. Further, the inclined air passage can be made shorter than vertically-bent air passage, thereby reducing a passage resistance. This increases the amount of outside air passing through the air passage, improving the cooling performance of outside air for the outer shell of the roof.

In an induction heating cooker according to a twelfth aspect of this disclosure, the outlet of the air passage and an outlet of the exhaust passage according to any one of the seventh to eleventh aspects are long holes extending in the same direction.

With such configuration, at any position, the air passage becomes closer to the outlet of the exhaust passage. That is, the length of a path from the inlet to the outlet of the air passage decreases, reducing a passage resistance. This increases outside air passing through the air passage, improving the cooling performance for the outer shell of the roof.

In an induction heating cooker according to a thirteenth aspect of this disclosure, surroundings of the roof according to any one of the first to twelfth aspects are opened.

With such configuration, the user can view the food material even during cooking. Moreover, hot air generated in the cooking container diffuses from the opened roof due to natural convection, suppressing an increase in the temperature of the roof.

Embodiments of this disclosure will be described below with reference to drawings. It should be noted that this disclosure is not limited to these embodiments.

### (Embodiment 1)

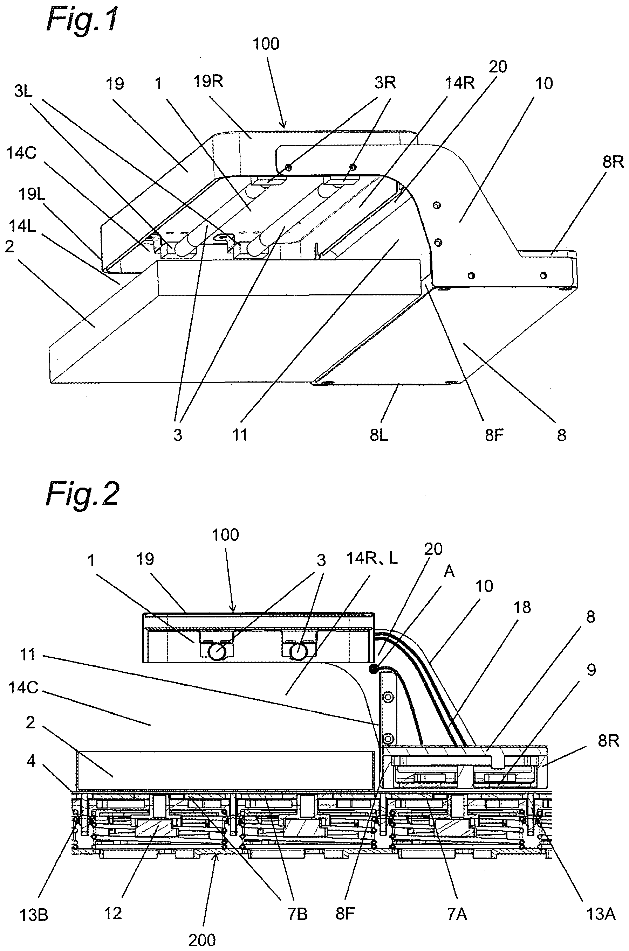

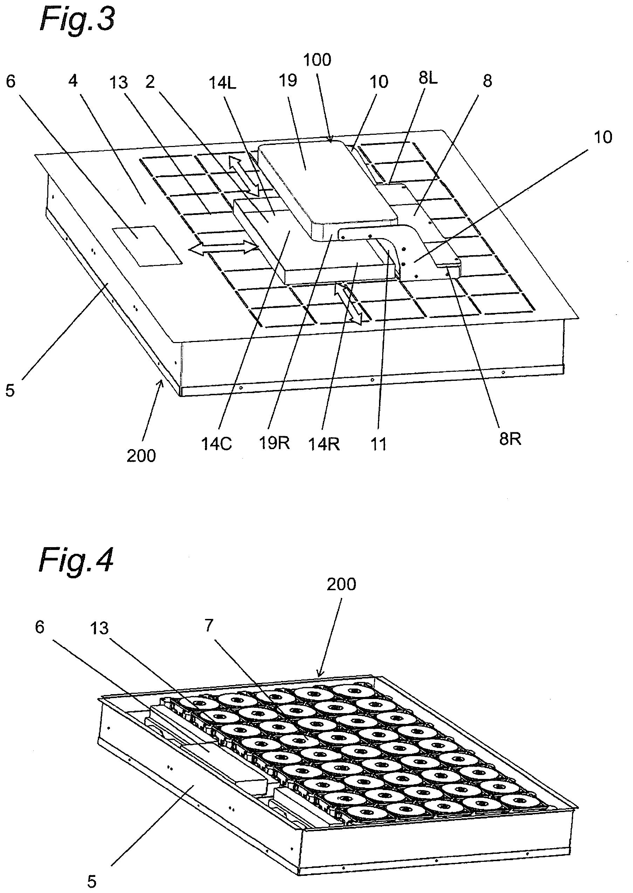

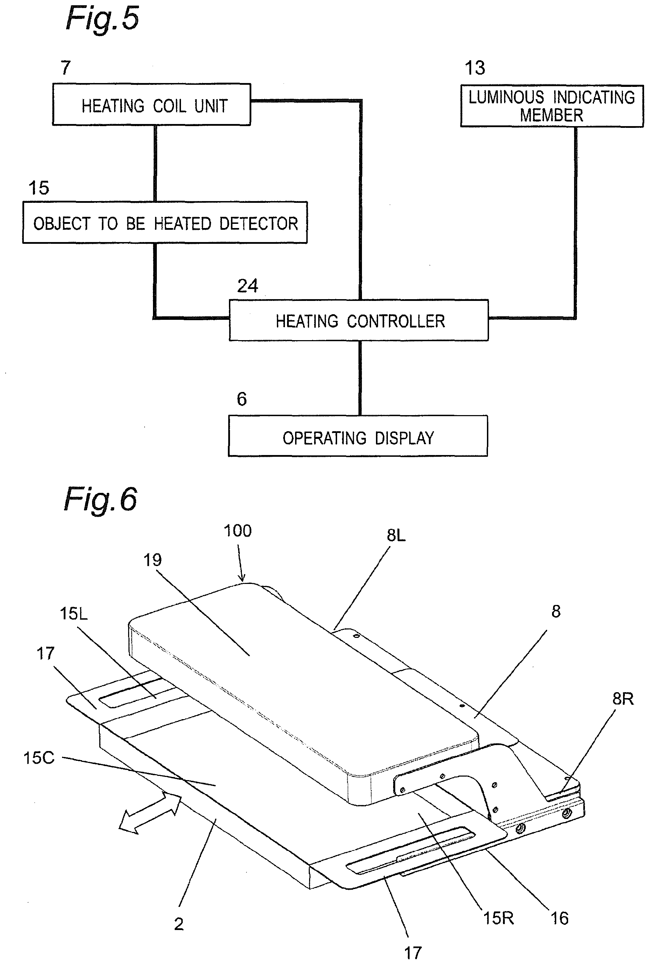

Fig. 1 is a perspective view illustrating the configuration of principal parts of an induction heating cooker in an embodiment 1 of this disclosure. Fig. 2 is a sectional view illustrating the configuration of principal parts of the induction heating cooker and an induction heating device. Fig. 3 is a perspective view illustrating the induction heating cooker and the induction heating device. Fig. 4 is a perspective view illustrating the induction heating device, with a top plate used for the induction heating cooker in the embodiment 1 of this disclosure removed. Fig. 5 is a block diagram illustrating control elements of the induction heating device.

An induction heating cooker 100 in the embodiment 1 of this disclosure includes a radiation heater 1 provided with heating elements 3 which execute radiation heating to an object to be heated which is placed on a cooking container 2 from above, a roof 19 which supports the radiation heater 1, a power receiving part 8 provided with power receiving coils 9 that receive inductively-fed power, connecting parts 18 that electrically connect the power receiving coils 9 of the power receiving part 8 to the heating elements 3 of the radiation heater 1, and supporting members 10 which extend from the power receiving part 8 to support the roof 19. The supporting members 10 support the roof 19 such that at least the heating elements 3 and the power receiving part 8 do not vertically overlap, and such that the supporting members 10 have an opening 14 through which the cooking container 2 can access a heating area of the radiation heater 1.

The induction heating cooker 100 in the embodiment 1 of this disclosure will be described in more detail with reference to drawings.

As shown in Fig. 1 and Fig. 2, the radiation heater 1 includes the heating elements 3 which execute radiation heating to the object to be heated (food material) which is placed on the cooking container 2 such as a pan or iron plate from above. Examples of the heating elements 3 include two infrared lamp heaters. The heating elements 3 are not limited to the infrared lamp heaters, and may be sheathed heaters. The radiation heater 1 may include a reflector that directs radiant heat from the heating elements 3 toward the object to be heated.

The roof 19 supports the radiation heater 1, and covers the upper portion of the radiation heater 1. Surroundings of the roof 19 are opened. Terminals 3L and 3R of the heating elements 3 of the radiation heater 1 are joined to opposed inner ends 19L and 19R of the roof 19, respectively. Although both the terminals 3L and 3R are joined to the ends 19L and 19R of the roof 19 in embodiment 1, the terminals 3L or the terminals 3R may be joined to the end 19L or the end 19R.

As shown in Fig. 3, the induction heating cooker 100 in embodiment 1 is placed on an induction heating device 200 during use. As shown in Fig. 3 and Fig. 4, the induction heating device 200 includes a top plate 4, heating coil units 7 disposed immediately below the top plate 4, an operating display 6 that manages the operation of the heating coil units 7, luminous indicating members 13 disposed around the heating coil units 7, and a body casing 5 that accommodates the heating coil units 7, the operating display 6, and the luminous indicating members 13.

The cooking container 2 is placed on the top plate 4. The top plate 4 covers an upper surface of the body casing 5. As shown in Fig. 4, the body casing 5 accommodates the operating display 6 having a touch panel at its liquid crystal display, and 45 heating coil units 7 arranged into a lattice (9 vertical rows and 5 horizontal columns with respect to the operating display 6). The number of the heating coil units 7 is exemplary, and is not limited to 45. The heating coil units 7 can execute induction heating to the object to be heated, and execute induction power feeding to the power receiving part 8. For example, as shown in Fig. 2, heating coil units 7B executes induction heating to the cooking container 2, and heating coil units 7A executes induction power feeding to the power receiving coils 9.

As shown in Fig. 2, the power receiving part 8 includes the power receiving coils 9 that receive power inductively fed from the heating coil units 7A disposed immediately below the power receiving coils 9. In the induction heating cooker 100 in the embodiment 1, the power receiving part 8 has the plurality of power receiving coils 9, and the power receiving coils 9 correspond to the respective heating coil units 7 of the induction heating device 200, one to one. The number of the power receiving coils 9 may be plural or single. The power receiving coils 9 do not need to correspond to the heating coil units 7 one-to-one as long as the heating coil units can execute induction power feeding to the power receiving coils. The power receiving coils 9 are electrically connected to the infrared lamp heaters (heating element) 3 of the radiation heater 1 via the connecting parts 18. The connecting parts 18 connect the power receiving coils 9 to the terminals 3L and 3R of the infrared lamp heaters 3. The connecting parts 18 may be any type that establishes electrical connection, including wiring such as a conducting wire.

The supporting members 10 are provided with a temperature sensor A (for example, thermistor) that detects the temperature of space between the cooking container 2 and the roof 19. The power receiving part 8 includes a controller B (not shown) that drives the temperature sensor A, and is driven with electric power from the power receiving coils 9.

The supporting members 10 extend from the power receiving part 8 and support the roof 19 such that the heating elements 3 and the power receiving part 8 do not vertically overlap each other. The heating elements 3 and the power receiving part 8 should be arranged such that the center of the axes of the lamp heaters does not overlap a vertical line upwardly extending from an end surface 8F of the power receiving part 8 on the side of the infrared lamp heaters 3. Specifically, as shown in Fig. 1 and Fig. 2, the supporting members 10 are a pair of plate-like members, lower portions of the supporting members 10 are joined to both ends 8L and 8R of the power receiving part 8, and upper portions of the supporting members 10, which diagonally extend from the power receiving part 8, are joined to the both ends 19L and 19R of the roof 19. The supporting members 10 support the roof 19 in a cantilever manner, with the roof 19 being disposed at a position higher than a position of the power receiving part 8. This forms the opening 14 (space between the fringe of the roof 19 and the top plate 4), through which the cooking container 2 can be accessed, below the radiation heater 1. The user can slide the cooking container 2 on the top plate 4 through the opening 14 to place the cooking container 2 in the heating area below the radiation heater 1. The heating area as used herein refers to an area heated with the radiation heater 1. For example, the user can slide the cooking container 2 in a direction expressed by a hollow arrow in Fig. 3 (in the forward-and-rearward direction or right-and-left direction with respect to the operating display 6) to move the cooking container 2 to the heating area of the radiation heater 1. The user may move the cooking container 2 to the heating area by sliding or lifting the cooking container 2.

The opening 14 is opened such that the cooking container 2 can freely access the heating area of the radiation heater 1. For example, in the induction heating cooker 100 in Fig. 3, it is given the side of the operating display 6 is front, the right side when viewed from the operating display 6 is right, and the left side when viewed from the operating display 6 is left. In the heating cooker 100 shown in Fig. 3, the front opening 14C, the left opening 14L, and the right 14R are opened, and communicate with one another. Thus, the cooking container 2 can freely access the heating area of the radiation heater 1 through the opening 14. In addition, the user readily view the food material in the cooking container 2 through the openings 14C, 14L, 14R without handling the induction heating cooker 100 even during cooking. Although all of the openings 14C, 14L, and 14R communicate with one another in the induction heating cooker 100 in embodiment 1, the openings are not limited to this. At least one of the openings 14C, 14L, and 14R may be provided. At least one opening 14 allows the user to place and take out the cooking container 2 and view any food material through the opening 14.

A blocking member 11 is interposed between the radiation heater 1 and the power receiving part 8 to block radiant heat from the radiation heater 1 and the cooking container 2 to the power receiving part 8. The blocking member 11 covers an end 8F of the power receiving part 8 on the side of the cooking container 2 so as to prevent the cooking container 2 from directly contacting the power receiving part 8. The end 8F of the power receiving part 8 on the side of the cooking container 2 refers to the end (end surface) 8F of the power receiving part 8, which is opposed to the cooking container 2 placed on the top plate 4. The blocking member 11 extends from the end 8F of the power receiving part 8 on the side of the cooking container 2 upward (toward the radiation heater 1), and forms a gap 20 with the radiation heater 1, through which outside air passes. For example, the blocking member 11 may be attached to the supporting members 10 so as to extend from the end (end surface) 8F of the power receiving part 8 on the side of the cooking container 2 in substantially parallel toward the radiation heater 1. The blocking member 11 may be inclined as long as it can block radiation from the radiation heater 1 to the power receiving part 8 without blocking radiation from the radiation heater 1 to the food material. In the induction heating cooker 100 in embodiment 1, the blocking member 11 may be not disposed if an increase in the temperature of the power receiving part 8 is small.

A temperature sensor 12 (Fig. 2) that optically measures the temperature of the cooking container 2 such as a pan is provided on lower surfaces of the heating coil units 7. The temperature sensor 12 is, for example, an infrared sensor. The temperature sensor 12 is not limited to the infrared sensor, and may be any type that can measure temperature.

The luminous indicating members 13 each having a light-emitting upper surface are disposed into a lattice so as to surround the heating coil units 7. A light-emitting section (not shown) as light source (LED) for the luminous indicating members 13 are provided in space surrounded with the plurality of heating coil units 7. The operating display 6 and the luminous indicating members 13 can be viewed from above the top plate 4 through the related area of the top plate 4.

A heating controller 24 that drives the heating coil units 7 and an object to be heated detector 15 that detects the cooking container 2 and the power receiving coils 9 are accommodated in the body casing 5. Rubber legs (not shown) that prevent displacement of the power receiving part 8 are provided at four corners of the lower surface of the power receiving part 8, causing a gap of 1 to 2 mm between the lower surface of the power receiving part 8 and the top plate 4.

Operations and effects of the induction heating cooker 100 thus configured will be described below.

As shown in Fig. 5, when the user activates the induction heating device 200 by instructing the start of cooking with the operating display 6, a start signal is inputted from the operating display 6 to the heating controller 24.

Next, when receiving the start signal, the heating controller 24 causes the object to be heated detector 15 to perform a detection operation of detecting whether the object to be heated is placed on each of the heating coil units 7. The detection operation acts to pass a detection current to each of the heating coil units 7, and detects whether the object to be heated is present on the basis of a change of the detection current.

When the top plate 4 is placed on the power receiving part 8 of the induction heating cooker 100, the object to be heated detector 15 outputs a detection signal as a detection result based on the detection current passed to each heating coil unit 7A immediately below the power receiving coil 9 of the power receiving part 8, to the heating controller 24.

The heating controller 24 causes the light-emitting section to emit light, thereby causing the luminous indicating members 13 around the heating coil units 7A corresponding to the location where the power receiving part 8 is to be placed to emit light. The user corrects the location of the power receiving part 8 to the center of an area surrounded with the light-emitting luminous indicating members 13. For example, the user moves the power receiving part 8 such that the power receiving part 8 falls within the area surrounded with the light-emitting luminous indicating members 13.

When the user slides the cooking container 2 on which the food material is placed onto the upper surface of the top plate 4, and locates the cooking container 2 in the heating area below the radiation heater 1, the object to be heated detector 15 outputs a detection signal as a detection result based on the detection current of each heating coil unit 7B immediately below the cooking container 2, to the heating controller 24.

The heating controller 24 causes the light-emitting section to emit light, thereby causing the luminous indicating members 13 around the heating coil units 7B corresponding to the location where the cooking container 2 is to be placed to emit light. Then, the user corrects the location of the cooking container 2 to an area surrounded with the light-emitting luminous indicating members 13. For example, the user moves the cooking container 2 such that the cooking container 2 falls within the area surrounded with the light-emitting luminous indicating members 13.

Subsequently, when the user operates the operating display 6 to set the output of the radiation heater 1 and the temperature of the cooking container 2, the operating display 6 inputs an output signal corresponding to each of the heating coil units 7A and 7B to the heating controller 24. The heating controller 24 energizes the heating coil units 7A and 7B according to the respective output signals.

The power receiving coils 9 are electromagnetically induced by the heating coil units 7A to generate an electromotive force, and energize the infrared lamp heaters 3 via the connecting parts 18 to generate heat and light in the infrared lamp heaters 3. The cooking container 2 is inductively heated by the heating coil units 7B. An eddy current occurs on the bottom surface of the cooking container 2, and the cooking container 2 generates heat (Joule heat) and thus, is heated by itself.

The controller B causes the temperature sensor A to detect the temperature of the space between the cooking container 2 and the roof 19. When the temperature detected by the temperature sensor A is higher than a predetermined threshold (for example, is higher than a temperature set by the user), the controller B controls to reduce power fed to the infrared lamp heaters 3, lowering the temperature of the infrared lamp heaters 3. As described above, in the induction heating cooker 100 in the embodiment 1, the output of the radiation heater 1 is controlled by adjusting power fed from the heating coil units 7A on the side of the power receiving part 8. That is, the heating coil units 7A on the power feeding side feeds constant power corresponding to the output set by the user, while the power receiving part 8 on the power receiving side adjusts power fed to the infrared lamp heaters 3 according to the temperature detected by the temperature sensor A, controlling the output of the radiation heater 1.

In the heating coil units 7B, the temperature sensor 12 provided in the heating coil units 7B detects the temperature of the bottom surface of the cooking container 2. A detection signal that is a detection result of the temperature sensor 12 is inputted to the heating controller 24. Then, the heating controller 24 controls an input to the heating coil units 7B according to the detected temperature of the cooking container 2 to control the temperature of the cooking container 2 to a predetermined temperature (for example, about 220°C (degree Celsius)).

As described above, the food material is heated with the radiation heater 1 from above, and with the heating coil units 7B from the bottom surface of the cooking container 2. That is, the induction heating cooker 100 and the induction heating device 200 in the embodiment 1 can cook the food material by heating from both of the upper and lower sides. During use, the user can view the food material through opening 14 to check the cooking state. Moreover, the user can take the food material out of the cooking container 2 through the opening 14 to view the food material.

When cooking of the food material is finished, and the user operates the operating display 6 to set stop of heating, the operating display 6 inputs a stop signal to the heating controller 24. When receiving the stop signal, the heating controller 24 stops the heating coil units 7A and 7B. After cooking with heat, the user can slide the cooking container 2 on the upper surface of the top plate 4, and take the cooking container 2 out of the heating area through the opening 14 easily.

During the series of operations, the heating elements 3 and the power receiving part 8 are disposed so as not to vertically overlap with each other. The radiation heater 1 is located at a position higher than a position of the power receiving part 8 and they form the openings 14C, 14L, and 14R on three sides (the front, right, and left sides of the induction heating cooker 100 in Fig. 3) that do not face the power receiving part 8. Accordingly, as expressed by the hollow arrow in Fig. 3, the user can freely place the cooking container 2 below the radiation heater 1 or take the cooking container 2 out of the radiation heater 1 through the openings 14C, 14L, and 14R, which improves the convenience. Although the openings 14C, 14L, and 14R communicate with one another in the embodiment 1, at least one opening 14 enables the user to place the cooking container 2 in or take the cooking container 2 out of the heating area of the radiation heater 1, as well as to view the food material.

Especially, to take out the cooking container 2, the cooking container 2 can be slid along the plane forming the top plate 4, which is advantageous for handling the heated cooking container 2.

Hot air generated in the cooking container 2 diffuses upward due to natural convection. Further, since heat at high temperature of the radiation heater 1 due to radiation and thermal conduction of the infrared lamp heaters 3 is conducted from the radiation heater 1 to the power receiving part 8 through the supporting members 10, the amount of heat transferred from the radiation heater 1 to the power receiving part 8 is reduced. As a result, an increase in the temperature of the power receiving coils 9 can be suppressed.

During heat generation, the temperature of the infrared lamp heaters (heating element) 3 becomes high at the center. For this reason, the terminals 3L and 3R provided at the ends of the infrared lamp heaters 3 and the connecting parts 18 connected to the respective terminals 3L and 3R are less subjected to heat from the infrared lamp heaters 3 than the center of the infrared lamp heaters 3. Thus, the temperature of the radiation heater 1 is lower in the vicinity of the terminals 3L and 3R and the connecting parts 18 than at the center of the infrared lamp heaters 3. Since the terminals 3L and 3R are joined to the opposed ends 19L and 19R of the roof 19, an increase in the temperature of the ends 19L and 19R of the roof 19 is suppressed.

Since supporting members 10 are joined to the ends 19L and 19R of the roof 19, which are joined to the vicinity of the terminals 3L and 3R and the connecting parts 18, and are cooler than the center of the heating elements 3, the amount of heat transferred from the radiation heater 1 to the power receiving part 8 via the supporting members 10 is small, suppressing an increase in the temperature of the power receiving coils 9.

The blocking member 11 can block radiation from the radiation heater 1 and the hot cooking container 2 to the power receiving part 8, and prevent hot air generated from the cooking container 2 from entering to the power receiving part 8 due to surrounding air flow of a ventilation fan, an air conditioner, or the like. This can sufficiently suppress an increase in the temperature of the power receiving coils 9.

### (Embodiment 2)

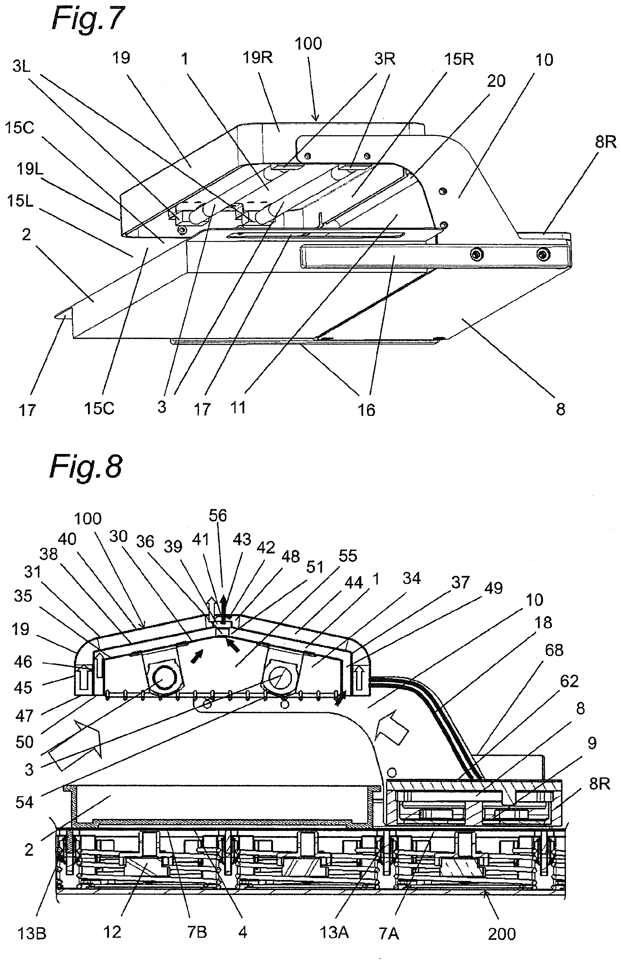

An induction heating cooker in an embodiment 2 of this disclosure will be described below. Fig. 6 is a perspective view illustrating the configuration of principal parts of the induction heating cooker in the embodiment 2 of this disclosure. Fig. 7 is a perspective view illustrating the configuration of principal parts of the induction heating cooker.

The same components in this embodiment as those in the embodiment 1 are given the same reference numerals, and description thereof is omitted. This embodiment is different from the embodiment 1 in that legs 16 extending from the both opposed ends 8L and 8R of the power receiving part 8 along the edge of the heating area of the radiation heater 1 are provided. Two user-graspable collars 17 are also provided on edges of the cooking container 2 used in the embodiment 2.

In the embodiment 2, a pair of plate-like legs 16 extends from the both opposed ends 8L and 8R of the power receiving part 8 along the edge of the heating area of the radiation heater 1. Thus, in the induction heating cooker 100 in the embodiment 2, openings 15R and 15L that are opened to a space between the legs 16 and the roof 19 are formed in the lateral direction. In the embodiment 2, an opening 15C is formed by opening a space between both the legs 16 in the horizontal direction (forward direction of the induction heating cooker 100).

Consequently, in the induction heating cooker 100 in the embodiment 2, the legs 16 can bear the weight of the radiation heater 1 provided with the heating elements 3 disposed so as not to vertically overlap with the power receiving part 8. That is, the induction heating cooker 100 in the embodiment 2 has a stable configuration in which the legs 16 bring the radiation heater 1 and the power receiving part 8 into balance in weight. The shape of the legs 16 is not limited to be plate-like, and may have any type that can bear the weight of the radiation heater 1.

The cooking container 2 in the embodiment 2 includes user-graspable collars 17. When the cooking container 2 is located in the heating area below the radiation heater 1, the collars 17 can be placed in the openings 15R and 15L above the legs 16. Thus, the induction heating cooker 100 can be shortened by the length of the collars 17 of the cooking container 2 to reduce the footprint of the induction heating cooker 100, achieving miniaturization of the induction heating cooker 100 as a whole. Specifically, the openings 15R and 15L are located outside of the area radiatively heated with the radiation heater 1 (heating area). As a result, when the collars 17 of the cooking container 2 are placed in the openings 15R and 15L, the collars 17 of the cooking container 2 become cooler than the cooking container 2 heated in the heating area due to heat radiation to outside air. As described above, since the collars 17 become cooler than the center of the heating area due to heat radiation, the user can grasp the collars 17 to take out the high-temperature heated cooking container 2, thereby suppressing an uncomfortable "hot" feeling and improving the user-friendliness.

### (Embodiment 3)

An induction heating cooker in an embodiment 3 of this disclosure will be described below. The same components in this embodiment as those in the embodiments 1 and 2 are given the same reference numerals, and description thereof is omitted. This embodiment is different from the embodiments 1 and 2 in that the roof is provided with an air passage and an exhaust passage.

For the induction heating cookers in the embodiments 1 and 2 of this disclosure, smoke and/or steam (hot air) generated from the food material diffuses from surroundings of the roof due to natural convection. The roof of the induction heating cookers in the embodiments 1 and 2 is heated with hot air generated from the food material, resulting in that the temperature of the upper face (outer shell) of the roof may exceed 200°C (degree Celsius), giving an uncomfortable "hot" feeling to the user.

Thus, in the induction heating cooker in the embodiment 3 of this disclosure, the roof is provided with the air passage and the exhaust passage to suppress an increase in the temperature of the outer shell of the roof by cooling with outside air without requiring power.

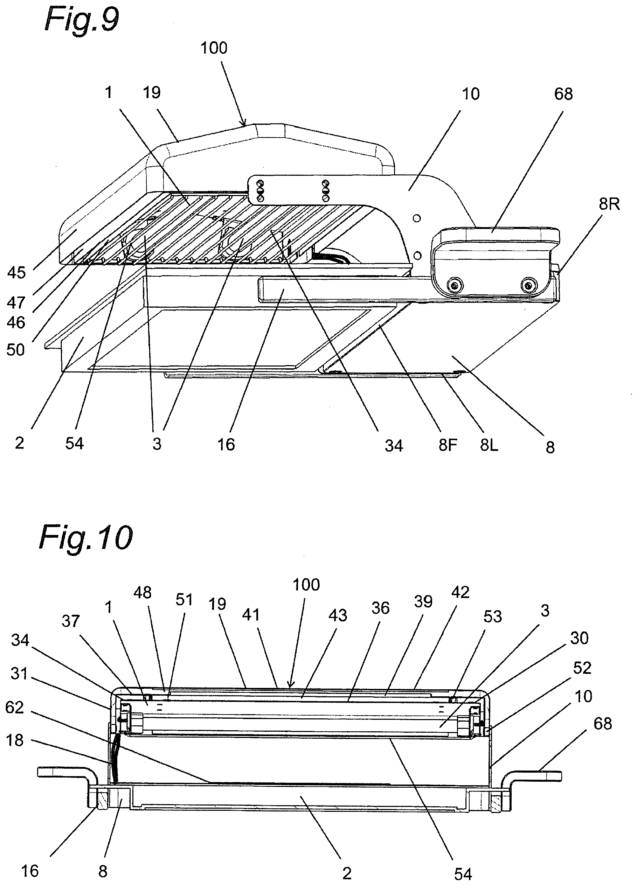

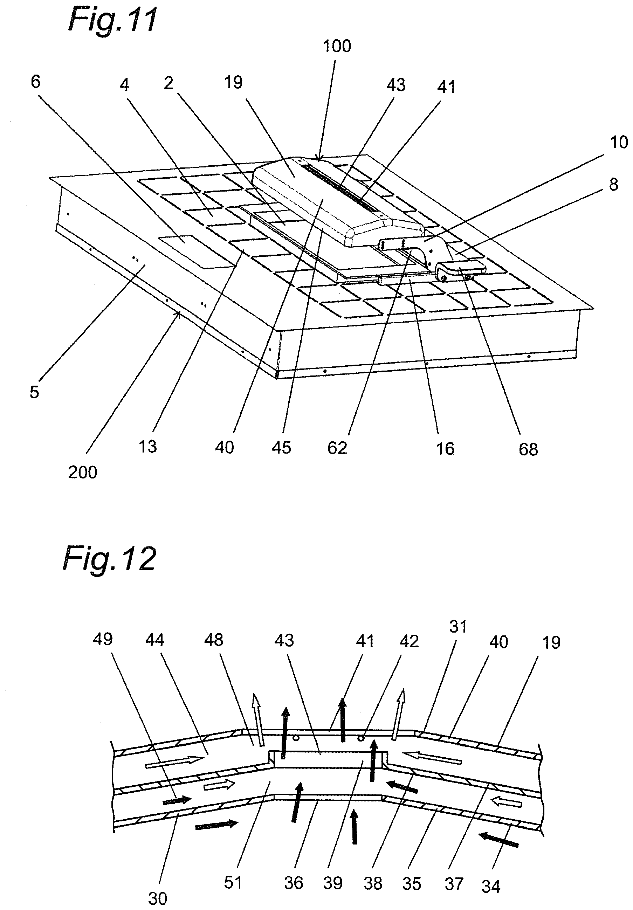

Fig. 8 is a side sectional view illustrating the configuration of principal parts of the induction heating cooker and the induction heating device in the embodiment 3 of this disclosure. Fig. 9 is a perspective view illustrating the configuration of principal parts of the induction heating cooker. Fig. 10 is a front sectional view illustrating the configuration of principal parts of the induction heating cooker. Fig. 11 is a perspective view illustrating the induction heating cooker and the induction heating device.

In the induction heating cooker 100 in the embodiment 3 of this disclosure, the roof 19 includes an air passage disposed between an inner shell 30 and an outer shell 31, and an exhaust passage 43 that communicates an inner space 55 inside of the inner shell 30 with an outer space 56 outside of the outer shell 31. The radiation heater 1 includes a reflector 34 that directs radiant heat from the heating elements 3 toward the object to be heated, and is disposed in the inner space 55 of the roof 19. An inlet of the air passage is disposed near the end of the inner shell 30 or the outer shell 31 of the roof 19, and an outlet of the air passage is disposed near the exhaust passage 43.

As shown in Fig. 8 to Fig. 10, the roof 19 supports the radiation heater 1. The roof 19 has a triple structure in which the inner shell 30, the outer shell 31, and a partition 37 between the inner shell 30 and the outer shell 31 are formed with a space (air passage) therebetween. The inner shell 30 of the roof 19 also serves as the reflector 34 of the radiation heater 1.

The roof 19 is downwardly inclined from the center as an apex toward ends, and forms vertically-extending vertical surfaces at the ends. Near the apex of the roof 19, an outlet 41 of the exhaust passage is opened. The roof 19 has a two-layered structure having a first air passage 44 between the outer shell 31 and the partition 37, and a second air passage 49 between the inner shell 30 and the partition 37. The first air passage 44 and the second air passage 49 have respective inlets 47 and 50, near the ends of the roof 19, from which outside air or hot air enters, and respective outlets 48 and 51 communicating with the exhaust passage 43. The "near the ends of the roof 19" used herein refers to surroundings of the outer shell 31 or the inner shell 30, which form vertical surface sections at the ends of the roof 19 (vertical surface sections 45).

The radiation heater 1 includes the heating elements 3 and the reflector 34. The heating elements 3 executes radiation heating to the object to be heated (food material) placed on the cooking container 2 such as a pan or iron plate from above. The reflector 34 includes a reflector upper surface section 35 having an inclined upper surface that directs radiant heat from the heating elements 3 toward the cooking container (food material) 2. The reflector 34 further includes a reflector outlet 36 opened near the apex of the reflector upper face section 35.

The partition 37 is provided between the outer shell 31 and the inner shell 30 (reflector 34) of the roof 19. The partition 37 includes a partition upper surface section 38 having an inclined upper surface, and further includes a partition duct 39 provided near the apex of the partition upper surface section 38 so as to cover the reflector outlet 36. The roof 19 includes a roof upper surface section 40 having an inclined upper surface of the outer shell 31, and the outlet 41 of the exhaust passage is opened near the apex of the roof upper surface section 40 so as to cover the partition duct 39. The outlet 41 of the exhaust passage may be provided with a protective frame 42 that prevents a finger or the like from entering by mistake.

In the exhaust passage 43, the reflector outlet 36, the partition duct 39, and the outlet 41 of the exhaust passage communicate with one another. That is, the exhaust passage 43 communicates the inner space 55 formed inside of the reflector 34 that also serves as the inner shell 30 of the roof 19 with the outer space 56 outside of the outer shell 31 of the roof 19.

In the embodiment 3, the heating elements 3 are for example, two 400W (400 Watt) infrared lamp heaters. The cooking container 2 may be an iron plate of W(Width)330 mm x D(Depth)160 mm. Like a gable roof, the roof upper surface section 40 is inclined by 10 degrees with respect to the horizontal direction.

The reflector outlet 36, the partition duct 39, and the outlet 41 of the exhaust passage are long holes extending in the same direction. For example, the reflector outlet 36 is a long hole of W260 mm x D10 mm, and the partition duct 39 is the same long hole of W260 mm x D10 mm x H(Height)3 mm as the reflector outlet 36. For example, the outlet 41 of the exhaust passage is a wider long hole of W280 mm x D30 mm than the partition duct 39.

A distance between the partition upper surface section 38 and the roof upper surface section 40 is about 5 mm. A gap between the vertical surface sections 45 of the roof 19 and the vertical surface sections 46 of the partition 37 is about 10 mm. A distance between the reflector upper surface section 35 and the partition upper surface section 38 is about 5 mm. The inner shell 30 of the roof 19 is joined to the partition 37 via a cylindrical spacer 52 for keeping a gap between their left and right sides (opposed surfaces). The reflector 34 hangs on the partition 37 via a cylindrical spacer 53 for keeping a gap between the reflector upper surface section 35 and the partition upper face section 38. A protective frame 54 that prevents a finger from touching the infrared lamp heaters (heating element) 3 by mistake covers an opening of an end of the reflector 34.

The first air passage 44 has the first air passage inlets 47 near the ends of the outer shell 31 of the roof 19, and the second air passage 49 has the second air passage inlets 50 near the ends of the inner shell 30 of the roof 19. The first and second air passage inlets 47 and 50 are not limited to be formed near the ends of the outer shell 31 or the inner shell 30. For example, these inlets may be provided at any position where outside air easily enters, for example, on the roof upper surface section 40 of the outer shell 31. As an example, the first air passage outlet 48 and the second air passage outlet 51 may communicate with the exhaust passage 43 or need not communicate with the exhaust passage 43. For example, the first air passage outlet 48 and the second air passage outlet 51 may be disposed near the exhaust passage 43. The "near the exhaust passage 43" refers to the area, the pressure of which is reduced by the air flow from the outlet 41 of the exhaust passage.

The first air passage 44 and the second air passage 49 are formed throughout the roof 19. The air passages may not be provided partially in a user-untouchable area of the roof 19.

In the induction heating cooker 100 in the embodiment 3 of this disclosure, a radiator plate 62 is disposed on the upper surface of the power receiving part 8. The radiator plate 62 is made of a highly-heat conductive material such as aluminum.

Like the induction heating cooker 100 in the embodiment 2, the induction heating cooker 100 in the embodiment 3 includes the pair of legs 16 extending from the opposed ends 8L and 8R of the power receiving part 8 along the edge of the heating area of the radiation heater 1. A user-graspable handle 68 is provided at each of opposed ends of the power receiving part 8.

Fig. 11 is a perspective view illustrating the induction heating cooker in the embodiment 3 of this disclosure. As shown in Fig. 11, the induction heating cooker in the embodiment 3 of this disclosure is placed on the top plate 4. Operations of the induction heating cooker in the embodiment 3 are the same as that of the induction heating cookers in the embodiments 1 and 2 and thus, description thereof is omitted.

Next, a thermal flow of the roof 19 will be described below referring to an experiment result. Fig. 12 is an enlarged side sectional view illustrating the configuration of principal parts of the induction heating cooker in the embodiment 3 of this disclosure.

Hot air containing steam from the food material in the hot cooking container 2 rises due to natural convection. Subsequently, the hot air is heated with the heating elements 3 up to 300°C (degree Celsius) or more. Then, as shown in Fig. 12, the hot air (expressed by solid arrows in Fig. 12) rises along the reflector upper surface section 35, flows into the exhaust passage 43 through the reflector outlet 36 and then, rises in the partition duct 39. At this time, the surrounding of the second air passage outlet 51 is subjected to a negative pressure, and outside air (expressed by hollow arrows in Fig. 12) is sucked into the second air passage 49 through the second air passage inlets 50. Subsequently, the hot air is rectified with the partition duct 39, and is jetted from the outlet 41 of the exhaust passage in one direction (substantially vertical upward direction with respect to the upper surface of the top plate 4). As a result, the first air passage outlet 48 is subjected to a larger negative pressure, and outside air (expressed by hollow arrows in Fig. 12) is sucked into the first air passage 44 through the first air passage inlets 47 (so-called ejector effect). The opening of the outlet 41 of the exhaust passage is larger than that of the partition duct 39 through which hot air passes. Thus, since hot air is surrounded with outside air jetted from the first air passage outlet 48, even when the user holds his/her hands in front of the outlet 41 of the exhaust passage by mistake, an uncomfortable "hot" feeling for the user can be suppressed. Further, since hot air is jetted from about the center of the outlet 41 of the exhaust passage 43 in the substantially vertical upward direction with respect to the upper surface of the top plate 4, hot air never contacts the outer shell 31 of the roof 19 around the outlet 41 of the exhaust passage. In this manner, outside air passing through the first air passage 44 cools the outer shell 31 of the roof 19 from the inside.

The Inventors' experiment of visualizing an air flow in the gap between the roof 19 and the cooking container 2 by use of smoke of a stick of incense demonstrated that a sufficient amount of outside air (large hollow arrows in Fig. 8) to cool the outer shell 31 of the roof 19 from the inside flowed into the first and second air passages 44 and 49.

Even when hot air is pushed by an indoor air flow of a ventilation fan, an air conditioner, or the like, and overflows the inner space 55 of the reflector 34, hot air (solid arrows) flows into the second air passage 49 through the adjacent second air passage inlets 50. Thereby, outside air flows into the first air passage 44 without allowing hot air to enter the first air passage 44, such that outside air in the first air passage 44 sufficiently cools the outer shell 31 of the roof 19 from the inside. The reflector 34 is heated up to 500degrees C or more mainly with radiation by the heating elements 3. However, the partition 37 can block radiation from the outer surface of the reflector 34, preventing radiation heating from the heating elements 3 to the outer shell 31 of the roof 19. Although the partition 37 is heated to about 200 degrees C, the temperature of the outer shell 31 of the roof 19 fails to reach 100 degrees C.

In the induction heating cooker 100 in the embodiment 3, the roof 19 is inclined such that the first and second air passage outlets 48 and 51 are located at a position higher than positions of the first and second air passage inlets 47 and 50. Thus, hot air in the inner space 55 of the roof 19 tends to move along the inclined surface of the inner shell 30 of the roof 19 and concentrate near the reflector outlet 36 of the roof 19. Further, since the first and second air passages 44 and 49 are inclined, hot air or outside air flowing the passages tends to rise due to natural convection. For this reason, the amount of hot air discharged from the exhaust passage 43 increases to increase the negative pressure at the first and second air passage outlets 48 and 51, resulting in that more outside air can be sucked into the first and second air passages 44 and 49. Moreover, the inclined first and second air passages 44 and 49 can be shorter than vertically-bent first and second air passages 44 and 49, thereby reducing a passage resistance. As a result, outside air passing through the first air passage 44 and the second air passage 49 increases, improving the cooling performance of outside air for the outer shell 31 of the roof 19.

In the embodiment 3, the outlets 48 and 51 of the first and second air passages and the outlet 41 of the exhaust passage are long holes extending in the longitudinal direction of the roof 19. With such configuration, at any position, the first air passage 44 and the second air passage 49 becomes closer to the outlet 41 of the exhaust passage and the exhaust passage 43. That is, the length of the first air passage 44 and the second air passage 49 is reduced, decreasing a passage resistance. Further, the length of the second air passage 49 is uniform at any position. As a result, outside air passing through the first air passage 44 and the second air passage 49 increases and is substantially uniform, improving the cooling performance of the outside air for the outer shell 31 of the roof 19. Although the outlets 48 and 51 of the first and second air passages and the outlet 41 of the exhaust passage are long holes in the embodiment 3, they are not limited to this shape. For example, the outlets 48 and 51 of the first and second air passages and the outlet 41 of the exhaust passage each may be formed of a plurality holes. The outlet 41 of the exhaust passage may be a long hole, and the outlets 48 and 51 of the first and second air passages each may be a plurality of holes extending along the direction in which the long hole of the outlet 41 of the exhaust passage extends.

The gap between the vertical surface sections 45 of the roof 19 and the vertical surface sections 46 of the partition 37 is about twice as much as the distance between the partition upper surface section 38 and the roof upper surface section 40. This reduces the effect of radiant heat from the partition 37 as much as possible, and facilitates suction of outside air. As a result, the vertical surface sections 45 of the roof 19 becomes close to the heating elements 3 and/or reflector 34 and tends to be hot, but an increase in the temperature is suppressed.

In the induction heating cooker in the embodiment 3 of this disclosure, the outer shell 31 of the roof 19 is not directly joined to the reflector 34. That is, since the outer shell 31 of the roof 19 conducts heat from the reflector 34 via the partition 37 and the spacers 52 and 53, a thermal resistance is extremely large (heat conduction distance is large) and thus, an increase in the temperature of the outer shell 31 of the roof 19 can be suppressed.

As described above, in this embodiment, the temperature of the outer shell of the roof 19 can be prevented from exceeding 100 degrees C and thus, even when the user carelessly touches it, the user does not have an uncomfortable "hot" feeling.

Although the heating elements 3 also radiate heat toward the power receiving part 8, the radiator plate 62 receives the heat and conducts it to ends away from the heating elements 3 and then, radiates it to outside air. Consequently, an increase in the temperature of the power receiving part 8 and the radiator plate 62 is suppressed to be below 60 degrees C. Thus, even when the user carelessly touches the power receiving part 8 and/or the radiator plate 62, the user does not have an uncomfortable "hot" feeling.

The inclination angle of the reflector upper surface section 35 may be about 5 degrees. However, since a floor on which the induction heating device 200 is mounted may be inclined by 3 to 5 degrees, the inclination angle is set to 10 degrees. Conversely, when the inclination angle of the reflector upper face section 35 is increased, the roof 19 becomes thick to increase the size of the air passages, resulting in that more outside air is sucked to improve the cooling performance.

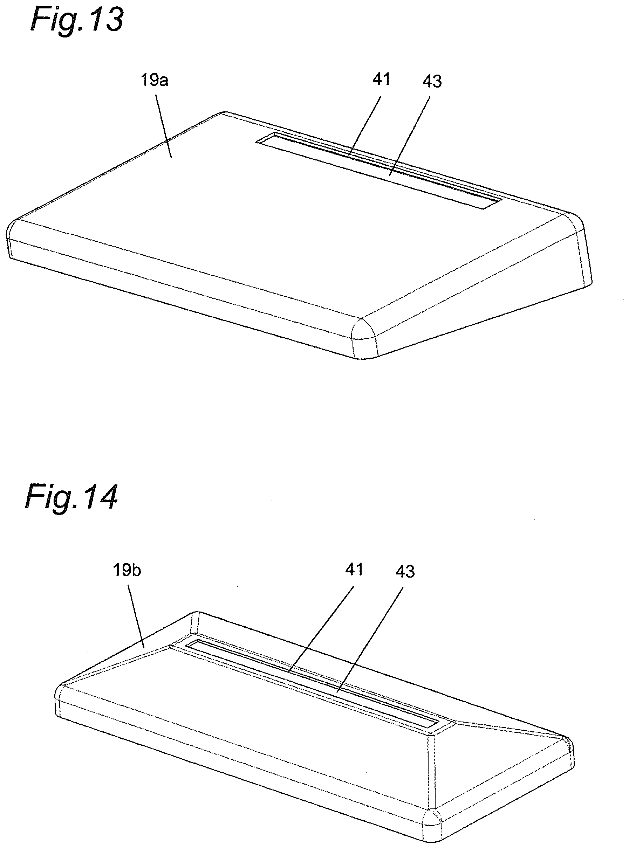

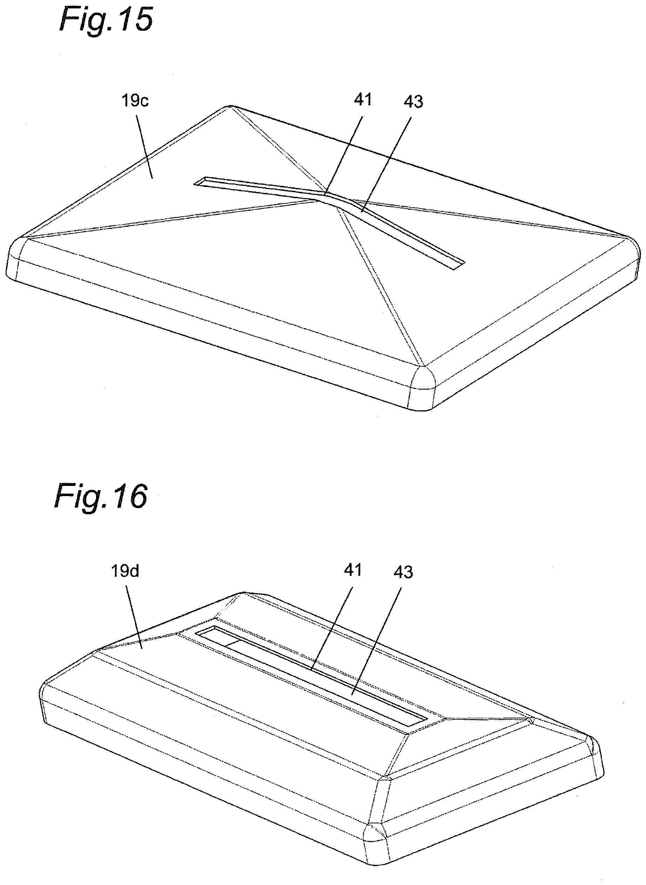

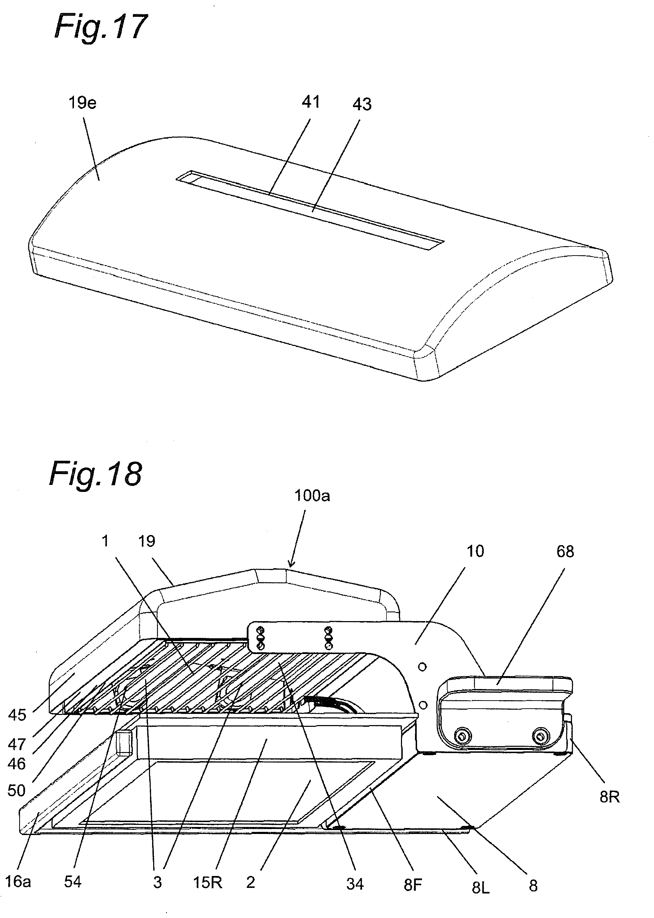

Fig. 13 to Fig. 17 are enlarged perspective views illustrating modification examples of the roof of the induction heating cooker in the embodiment 3 of this disclosure. Although the roof 19 is a gable roof in the embodiment 3, as shown in Fig. 14 to Fig. 17, it is not limited to the gable roof, and may be a shed roof 19a, a hipped roof 19b, a pavilion roof 19c, a mansard roof 19d, or a barrel roof 19e. As shown in Fig. 13, the shed roof 19a is inclined in only one direction. As shown in Fig. 14, the hipped roof 19b is inclined in four directions, and is formed of two substantially triangular roofs and two substantially trapezoidal roofs. As shown in Fig. 15, the pavilion roof 19c is formed of four substantially triangular roofs inclined from the apex of the roofs in four directions. As shown in Fig. 16, the mansard roof 19d is a hipped roof inclined in two stages, in which its upper portion is gently inclined and its lower portion is sharply inclined. As shown in Fig. 17, the barrel roof 19e is an arch-like rounded roof. As shown in Fig. 13 to 17, the exhaust passages 43 and the outlets 41 of the exhaust passages of these roofs are disposed near the respective apexes. The reflector 34 may also take various shapes according to the shape of the roof 19, and is not limited to the shapes in the embodiment 1 to 3.

Although the induction heating cooker 100 in the embodiment 3 includes the partition 37 in the roof 19, the partition 37 may be omitted. Even without the partition 37, hot air that is pushed by indoor air flow and overflows the inner space 55 of the reflector 34 flows into the air passages. Thus, the temperature of the outer shell of the roof 19 exceeds 100degrees C due to radiation from the reflector 34, but falls below 150 degrees C due to heat radiation to outside air. As a result, even when the user carelessly touches the outer shell 31 of the roof 19, an uncomfortable "hot" feeling to the user can be suppressed.

Although the reflector 34 also serves as the inner shell 30 of the roof 19 in the embodiment 3, the reflector 34 and the inner shell 30 of the roof 19 may be separate members. Disposing the reflector 34 between the outer shell 31 of the roof 19 and the heating elements 3, and separating the reflector 34 from the inner shell 30 of the roof 19 can further suppress an increase in the temperature of the outer shell 31 of the roof 19.

Fig. 18 is a perspective view illustrating a modification example of the induction heating cooker in the embodiment 3 of this disclosure. Although the legs 16 extend from the both ends 8L and 8R of the power receiving part 8 along the edge of the heating area of the radiation heater 1 in the embodiments 2 and 3, the legs may take other shapes. For example, as shown in Fig. 18, in an induction heating cooker 100a in a modification example, the leg 16 may extend from one end 8L of the power receiving part 8 and be vertically bent so as to surround the heating area of the radiation heater 1 into an L-like shape. That is, in the induction heating cooker 100a in the modification example, the one leg 16 surrounds the heating area, and the heating area surrounded with the leg 16 is opened in the horizontal direction. With such configuration, the one leg 16 can bear the weight of the radiation heater 1, bringing the radiation heater 1 and the power receiving part 8 into balance in weight. Further, the user can freely access the cooking container 2 through the opened space (opening) of the leg 16, and view a food material through an opening 15R. In the induction heating cooker of this disclosure, for example, an inverted C-shaped plate-like leg 16 may surround the heating area of the radiation heater 1, and an opening may be formed between the roof 19 and the leg 16.

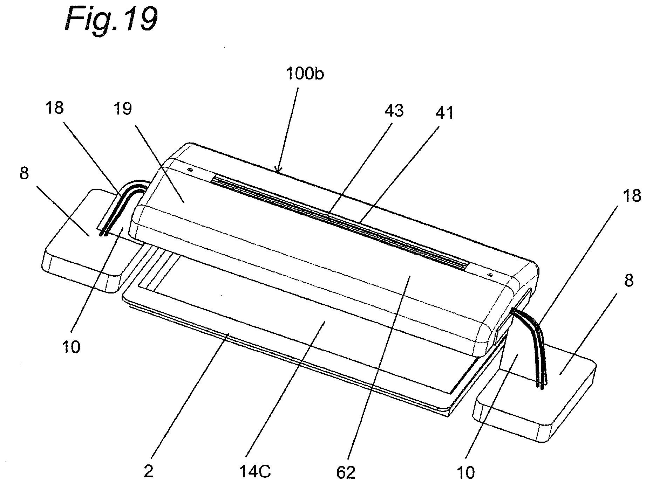

Fig. 19 is a perspective view illustrating another modification example of the induction heating cooker in the embodiment 3 of this disclosure. In the induction heating cooker 100 in the embodiments 1 to 3, only one power receiving part 8 is provided, and the supporting members 10 support the roof 19 in a cantilever manner, however, this disclosure is not limited to this. For example, as shown in Fig. 19, in an induction heating cooker 100b in a modification example, two power receiving parts 8 and two supporting members 10 are provided, and the supporting members 10 extending from the respective power receiving parts 8 support the roof 19 from both sides (double support). With such configuration, the supporting members 10 can support the roof 19 from the both sides, bringing the radiation heater 1 and the power receiving part 8 into balance in weight. Further, since an opening 14C, through which the cooking container 2 can access the heating area of the radiation heater 1, is formed on the side where the supporting member 10 is not disposed, the user can readily place or take out the cooking container 2 through the opening 14C. Moreover, the user can view the food material through the opening 14C.

In the embodiments 1 to 3, only the radiation heater 1 may grill the food material by radiation from above without inductive heating of the cooking container 2 by use of the heating coil units 7.

The opening 14 of the induction heating cookers 100 in the embodiments 1 to 3 of this disclosure may be formed in any size and at any position, as long as the cooking container 2 can be accessed through the opening 14. That is, the opening 14 may be formed in any size and at any position, as long as the user can place and take the cooking container 2 in and out of the heating area. With such configuration, the user can freely place the cooking container 2 in the heating area of the radiation heater 1 through the opening 14, and take out the cooking container 2 through the opening 14. Moreover, the user can view any food material through the opening 14 even during cooking.

### Industrial Applicability

As has been described, the induction heating cooker according to this disclosure can facilitate placement and take-out of the cooking container and enables viewing of any food material being cooked, which is suitable as a cooking appliance. In addition, the induction heating cooker of this disclosure requires no power, and suppresses an increase in the temperature of the outer shell of the roof through cooling by outside air, which is advantageous as a cooking appliance.

### Reference Signs List

1: radiation heater
2: cooking container
3: infrared lamp heater (heating element)
3R, 3L: terminal
4: top plate
5: body casing
6: operating display
7, 7A, 7B: heating coil unit
8: power receiving part
8F, 8L, 8R: end
9: power receiving coil
10: supporting member
11: blocking member
12: temperature sensor
13, 13A, 13B: luminous indicating member
14, 14C, 14L, 14R: opening
15: object to be heated detector
15C, 15L, 15R: opening
16: leg
17: collar
18: connecting part
19: roof
19R, 19L: end
20: gap
24: heating controller
30: inner shell
31: outer shell
34: reflector
35: reflector upper surface section
36: reflector outlet
37: partition
38: partition upper surface section
39: partition duct
40: roof upper surface section
41: exhaust passage outlet
42: protective frame
43: exhaust passage
44: first air passage
45: vertical surface section
46: vertical surface section
47: first air passage inlet
48: first air passage outlet
49: second air passage
50: second air passage inlet
51: second air passage outlet
52: spacer
53: spacer
54: protective frame
55: inner space
56: outer space
62: radiator plate
68: handle
100: induction heating cooker
200: induction heating device

## Claims

1. An induction heating cooker (100) comprising:
a radiation heater (1) having a heating element (3) configured to execute radiation heating from above to an object to be heated placed on a cooking container (2);
a roof (19) supporting the radiation heater (1);
a power receiving part (8) having a plurality of power receiving coils (9) configured to receive inductively-fed power;
a connecting part (18) configured to electrically connect the power receiving coil (9) of the power receiving part (8) to the heating element (3) of the radiation heater (1); and
two supporting members (10) extending in the same direction from the power receiving part (8) to support the roof (19),
**characterized in that**
the supporting members (10) support the roof (19) so as not to vertically overlap at least the heating element (3) with the power receiving part (8), and so as to have an opening (14, 15) through which the cooking container (2) can access a heating area of the radiation heater (1), and that
the supporting members (10) have a leg (16) extending from an end of the power receiving part (8) along an edge of the heating area,
wherein the leg (16) horizontally opens the heating area surrounded with the leg (16).

2. The induction heating cooker (100) according to claim 1, wherein
the leg (16) and the roof (19) have a space therebetween.

3. The induction heating cooker (100) according to claim 1 or 2, wherein
a terminal (3R, 3L) of the heating element (3) of the radiation heater (1) is joined to an end (19R, 19L) of the roof (19), and
the supporting members (10) are joined to the end (19R, 19L) of the roof (19).

4. The induction heating cooker (100) according to any one of claims 1 to 3, further comprising a blocking member (11) disposed between the radiation heater (1) and the power receiving part (8), wherein
the blocking member (11) covers an end of the power receiving part (8) on the side of the cooking container (2), extends upward from the end, and has a gap (20) between the radiation heater (1) and the blocking member (11).

5. The induction heating cooker (100) according to any one of claims 1 to 4, wherein
the roof (19) has an air passage (44, 49) disposed between an inner shell (30) and an outer shell (31), and an exhaust passage (43) vertically communicates an inner space (55) inside formed by the inner shell (30) and an outer space (56) outside of the outer shell (31),
the radiation heater (1) has a reflector (34) configured to direct radiant heat from the heating element (3) toward the object to be heated, and is disposed in the inner space (55) of the roof (19),
an inlet (47, 50) of the air passage (44, 49) is disposed near an end of the inner shell (30) or the outer shell (31) of the roof (19), and
an outlet (48, 51) of the air passage (44, 49) is disposed near the exhaust passage (43).

6. The induction heating cooker (100) according to claim 5, wherein
the outlet (48, 51) of the air passage (44, 49) communicates with the exhaust passage (43).

7. The induction heating cooker (100) according to claim 5 or 6, wherein
the roof (19) has a partition (37) disposed in the air passage (44, 49), and
the partition (37) divides the air passage (44, 49) into a first air passage (44) formed between the outer shell (31) and the partition (37), and a second air passage (49) formed between the partition (37) and the inner shell (30).

8. The induction heating cooker (100) according to claim 7, wherein
the roof (19) joins the outer shell (31) to the partition (37), joins the partition (37) to the inner shell (30), and joins the inner shell (30) to the reflector (34) of the radiation heater (1).

9. The induction heating cooker (100) according to any one of claims 5 to 8, wherein
the roof (19) disposes the outlet (48, 51) of the air passage (44, 49) at a position higher than a position of the inlet (47, 50) of the air passage (44, 49) to incline a path from the inlet (47, 50) to the outlet (48, 51) of the air passage (44, 49).

10. The induction heating cooker (100) according to any one of claims 5 to 9, wherein
the outlet (48, 51) of the air passage and an outlet (41) of the exhaust passage (43) are long holes extending in the same direction.

11. The induction heating cooker (100) according to any one of claims 1 to 10, wherein
surroundings of the roof (19) are opened.

## Patentansprüche

1. Induktionskochherd (100) enthaltend:
eine Strahlungsheizung (1), die ein Heizelement (3) aufweist, das dafür ausgelegt ist, von oben Strahlungsaufheizung auf ein zu erwärmendes Objekt, das auf einem Kochbehälter (2) platziert ist, auszuüben;
eine Bedachung (19), die die Strahlungsheizung (1) trägt;
ein leistungsaufnehmendes Teil (8), das eine Vielzahl an leistungsaufnehmenden Spulen (9) aufweist, die dazu ausgelegt sind, induktiv zugeführte Leistung aufzunehmen;
ein verbindendes Teil (18), dazu ausgelegt, die leistungsaufnehmende Spule (9) des leistungsaufnehmenden Teils (8) elektrisch mit dem Heizelement (3) der Strahlungsheizung (1) zu verbinden; und
zwei tragende Elemente (10), die sich vom leistungsaufnehmenden Teil (8) in die gleiche Richtung erstrecken, um die Bedachung (19) zu tragen,
**dadurch gekennzeichnet, dass**
die tragenden Elemente (10) die Bedachung (19) so tragen, dass sie zumindest das Heizelement (3) mit dem leistungsaufnehmenden Teil (8) nicht vertikal überlappen, und so, dass eine Öffnung (14, 15) vorhanden ist, durch welche der Kochbehälter (2) in eine Heizzone der Strahlungsheizung (1) gelangen kann, und dass
die tragenden Elemente (10) einen Schenkel (16) aufweisen, der sich von einem Ende des leistungsaufnehmenden Teils (8) entlang einer Kante der Heizzone erstreckt,
wobei der Schenkel (16) die vom Schenkel (16) eingefasste Heizzone horizontal offen lässt.

2. Induktionskochherd (100) nach Anspruch 1, wobei
der Schenkel (16) und die Bedachung (19) zwischen einander einen Freiraum lassen.

3. Induktionskochherd (100) nach einem der Ansprüche 1 oder 2, wobei
ein Anschlussstück (3R, 3L) des Heizelements (3) der Strahlungsheizung (1) an ein Ende (19R, 19L) der Überdachung (19) gefügt ist, und
die tragenden Elemente (10) an das Ende (19R, 19L) der Überdachung (19) gefügt sind.

4. Induktionskochherd (100) nach einem der Ansprüche 1 bis 3,
ferner ein Abtrennelement (11) enthaltend, das zwischen der Strahlungsheizung (1) und dem leistungsaufnehmenden Teil (8) angeordnet ist, wobei
das Abtrennelement (11) ein Ende des leistungsaufnehmenden Teils (8) auf der Seite des Kochbehälters (2) abdeckt, sich von dem Ende aufwärts erstreckt, und einen Spalt (20) zwischen der Strahlungsheizung (1) und dem Abtrennelement (11) aufweist.

5. Induktionskochherd (100) nach einem der Ansprüche 1 bis 4, wobei
die Überdachung (19) einen Luftdurchgang (44, 49), der zwischen einem inneren Gehäuse (30) und einem äußeren Gehäuse (31) angeordnet ist, und einen Abluftdurchgang (43) aufweist, der einen innenliegenden Raum (55), der innerhalb des inneren Gehäuses (30) ausgebildet ist, und einen außenliegenden Raum (56) außerhalb des äußeren Gehäuses (31) miteinander vertikal in Verbindung bringt,
die Strahlungsheizung (1) einen Reflektor (34) aufweist, der dazu ausgelegt ist, Strahlungswärme vom Heizelement (3) in Richtung des zu erwärmenden Objekts zu lenken, und in einem innenliegenden Raum (55) der Überdachung (19) angeordnet ist,
ein Einlass (47, 50) des Luftdurchgangs (44, 49) nahe einem Ende des inneren Gehäuses (30) oder des äußeren Gehäuses (31) oder der Überdachung (19) angeordnet ist; und
ein Auslass (48, 51) des Luftdurchgangs (44, 49) nahe des Abluftdurchgangs (43) angeordnet ist.

6. Induktionskochherd (100) nach Anspruch 5, wobei
der Auslass (48, 51) des Luftdurchgangs (44, 49) mit dem Abluftdurchgang (43) in Verbindung steht.

7. Induktionskochherd (100) nach einem der Ansprüche 5 oder 6, wobei
die Überdachung (19) eine Trennwand (37) aufweist, die in dem Luftdurchgang (44, 49) angeordnet ist, und
die Trennwand (37) den Luftdurchgang (44, 49) aufteilt in einen ersten Luftdurchgang (44), gebildet zwischen dem äußeren Gehäuse (31) und der Trennwand (37), und einen zweiten Luftdurchgang (49), gebildet zwischen der Trennwand (37) und dem inneren Gehäuse (30).

8. Induktionskochherd (100) nach Anspruch 7, wobei
die Überdachung (19) das äußere Gehäuse (31) mit der Trennwand (37) verbindet, die Trennwand (37) mit dem inneren Gehäuse (30) verbindet, und das innere Gehäuse (30) mit dem Reflektor (34) der Strahlungsheizung (1) verbindet.

9. Induktionskochherd (100) nach einem der Ansprüche 5 bis 8, wobei
die Überdachung (19) den Auslass (48, 51) des Luftdurchgangs (44, 49) an einer Position anordnet, die höher ist als eine Position des Einlasses (47, 50) des Luftdurchgangs (44, 49), um einen Pfad vom Einlass (47, 50) zum Auslass (48, 51) des Luftdurchgangs (44, 49) zu neigen.

10. Induktionskochherd (100) nach einem der Ansprüche 5 bis 9, wobei
der Auslass (48, 51) des Luftdurchgangs und ein Auslass (41) des Abluftdurchgangs (43) Langlöcher sind, die sich in der gleichen Richtung erstrecken.

11. Induktionskochherd (100) nach einem der Ansprüche 1 bis 10, wobei
der Umfangsbereich der Überdachung (19) geöffnet ist.

## Revendications

1. Appareil de cuisson à chauffage par induction (100) comprenant :
un dispositif de chauffage par rayonnement (1) ayant un élément chauffant (3) configuré pour exécuter un chauffage par rayonnement depuis le haut vers un objet à chauffer placé sur un récipient de cuisson (2) ;
un toit (19) supportant le dispositif de chauffage par rayonnement (1) ;
une partie de réception d'énergie (8) ayant une pluralité de bobines de réception d'énergie (9) configurées pour recevoir une énergie fournie par induction ;
une partie de connexion (18) configurée pour connecter électriquement la bobine de réception d'énergie (9) de la partie de réception d'énergie (8) à l'élément chauffant (3) du dispositif de chauffage par rayonnement (1) ; et
deux éléments de support (10) s'étendant dans la même direction à partir de la partie de réception d'énergie (8) pour supporter le toit (19),
**caractérisé en ce que**
les éléments de support (10) supportent le toit (19) de façon à ne pas chevaucher verticalement au moins l'élément chauffant (3) avec la partie de récep-tion d'énergie (8), et de façon à avoir une ouverture (14, 15) à travers laquelle le récipient de cuisson (2) peut accéder à une zone de chauffage du dispositif de chauffage par rayonnement (1), et que
les éléments de support (10) ont une patte (16) s'étendant à partir d'une extrémité de la partie de réception d'énergie (8) le long d'un bord de la zone de chauffage,
dans lequel la patte (16) ouvrant horizontalement la zone de chauffage entourée par la patte (16).

2. Appareil de cuisson à chauffage par induction (100) selon la revendication 1, dans lequel
la patte (16) et le toit (19) ont un espace entre eux.

3. Appareil de cuisson à chauffage par induction (100) selon la revendication 1 ou 2, dans lequel
un terminal (3R, 3L) de l'élément chauffant (3) du dispositif de chauffage par rayonnement (1) est relié à une extrémité (19R, 19L) du toit (19), et
les éléments de support (10) sont reliés à l'extrémité (19R, 19L) du toit (19).

4. Appareil de cuisson à chauffage par induction (100) selon l'une quelconque des revendications 1 à 3, comprenant en outre un élément de blocage (11) disposé entre le dispositif de chauffage par rayonnement (1) et la partie de réception d'énergie (8), dans lequel
l'élément de blocage (11) recouvre une extrémité de la partie de réception d'énergie (8) sur le côté du récipient de cuisson (2), s'étend vers le haut à partir de l'extrémité, et a un espace (20) entre le dispositif de chauffage par rayonnement (1) et l'élément de blocage (11).

5. Appareil de cuisson à chauffage par induction (100) selon l'une quelconque des revendications 1 à 4, dans lequel
le toit (19) a un passage d'air (44, 49) disposé entre une coque interne (30) et une coque externe (31), et un passage d'échappement (43) fait communiquer verticalement un espace interne (55) à l'intérieur formé par la coque interne (30) et un espace externe (56) à l'extérieur de la coque externe (31),
le dispositif de chauffage par rayonnement (1) a un réflecteur (34) configuré pour diriger la chaleur rayonnante provenant de l'élément chauffant (3) vers l'objet à chauffer, et est disposé dans l'espace interne (55) du toit (19),
une entrée (47, 50) du passage d'air (44, 49) est disposée à proximité d'une extrémité de la coque interne (30) ou de la coque externe (31) du toit (19), et
une sortie (48, 51) du passage d'air (44, 49) est disposée à proximité du passage d'échappement (43).

6. Appareil de cuisson à chauffage par induction (100) selon la revendication 5, dans lequel
la sortie (48, 51) du passage d'air (44, 49) communique avec le passage d'échappement (43).

7. Appareil de cuisson à chauffage par induction (100) selon la revendication 5 ou 6, dans lequel
le toit (19) a une cloison (37) disposée dans le passage d'air (44, 49), et la cloison (37) divise le passage d'air (44, 49) en un premier passage d'air (44) formé entre la coque externe (31) et la cloison (37), et un second passage d'air (49) formé entre la cloison (37) et la coque interne (30).

8. Appareil de cuisson à chauffage par induction (100) selon la revendication 7, dans lequel
le toit (19) relie la coque externe (31) à la cloison (37), relie la cloison (37) à la coque interne (30), et relie la coque interne (30) au réflecteur (34) du dispositif de chauffage par rayonnement (1).

9. Appareil de cuisson à chauffage par induction (100) selon l'une quelconque des revendications 5 à 8, dans lequel
le toit (19) dispose la sortie (48, 51) du passage d'air (44, 49) à une position supérieure à une position de l'entrée (47, 50) du passage d'air (44, 49) pour incliner un trajet de l'entrée (47, 50) à la sortie (48, 51) du passage d'air (44, 49).

10. Appareil de cuisson à chauffage par induction (100) selon l'une quelconque des revendications 5 à 9, dans lequel
la sortie (48, 51) du passage d'air et une sortie (41) du passage d'échappement (43) sont des trous longs s'étendant dans la même direction.

11. Appareil de cuisson à chauffage par induction (100) selon l'une quelconque des revendications 1 à 10, dans lequel
l'environnement du toit (19) est ouvert.
